# EUROPÄISCHE PATENTSCHRIFT

(11) **EP 1 891 838 B1**
(45) Veröffentlichungstag und Bekanntmachung des Hinweises auf die Patenterteilung: **02.07.2014**
(21) Anmeldenummer: 06742846.6
(22) Anmeldetag: 09.05.2006
(51) Int. Cl.: H05B 37/02

(54) **ERMITTLUNG DER BUSADRESSE EINES TEILNEHMERS IN EINEM BELEUCHTUNGS-BUSSYSTEM**
DETERMINATION OF THE BUS ADDRESS OF A SUBSCRIBER IN AN ILLUMINATING BUS SYSTEM
DETERMINATION DE L'ADRESSE DE BUS D'UN ELEMENT CONNECTE DANS UN SYSTEME DE BUS D'ECLAIRAGE

(30) Priorität: 17.06.2005 DE 102005028206
(43) Veröffentlichungstag der Anmeldung: 27.02.2008
(60) Teilanmeldung: 10182586.7
(73) Patentinhaber: Tridonic GmbH & Co KG, 6851 Dornbirn (AT)
(72) Erfinder: WALLHEAD, Geoff, Co Durham, DL5 5HL (GB); KEARS, John, Durham, DH7 6RS (GB)
(74) Vertreter: Rupp, Christian
(86) Internationale Anmeldenummer: PCT/EP2006/004328
(87) Internationale Veröffentlichungsnummer: WO 2006/136236

(56) Entgegenhaltungen:
- EP-A- 1 480 495
- WO-A-03/094579
- WO-A2-02/25842
- US-A- 5 051 861
- US-A- 5 652 504
- US-A1- 2002 175 641

## Beschreibung

Die vorliegende Erfindung bezieht sich ganz allgemein auf die Ermittlung der Busadresse, die einem Teilnehmer eines Beleuchtungs-Bussystems herstellerseitig oder auch nachträglich über einen Bus zugewiesen wurde.

Im Bereich der Beleuchtungs- und Haustechnik sind in den letzten Jahren immer mehr Systeme entwickelt worden, bei denen verschiedenartige Leuchtmittel-Betriebsgeräte (aber auch andere Aktuatoren oder Sensoren) über ein Bussystem miteinander verbunden werden können. Ein Beispiel für ein derartiges standardisiertes Bussystem ist der Industriestandard DALI.

Bei der Installation oder Änderung eines derartigen Bussystems muß einem neu hinzukommenden Teilnehmer (Betriebsgeräte, Aktuatoren, Sensoren wie bspw. Tageslichtsensoren und Bewegungsmeldern) üblicherweise eine Betriebsadresse zugewiesen werden. Diese Betriebsadresse kann sich von einer ggf. herstellerseitig vorgesehenen Adresse in dem Gerät unterscheiden.

Es ist bekannt, dass sich beispielsweise in der Art eines Zufallsprinzips die Busteilnehmer die Adressen innerhalb eines definierten Adressvorrats ausgelöst durch einen entsprechenden Befehl von einer Buszentrale selbst zuweisen. Da die Busadressvergabe an die Busteilnehmer nicht der zentrale Punkt der vorliegenden Erfindung ist, wird auf die einschlägig bekannten Verfahren verwiesen.

Auf jeden Fall wird jedem Busteilnehmer nach Abschluß des Adressvergabeverfahrens eine Betriebsadresse zugeteilt sein bzw. hat sich jeder Busteilnehmer selbst eine Adresse aus dem definierten Adressvorrat zugewiesen. Um nunmehr im folgenden eigentlichen Betrieb der mittels des Bussystems gesteuerten Beleuchtungsanlage zielgerecht vorgehen zu können, muß in Erfahrung gebracht werden, wie die Betriebsadresse eines jeden angeschlossenen Busteilnehmers lautet.

Aus dem Stand der Technik sind diesbezüglich bereits verschiedenartige Verfahren bekannt.

Gemäß der EP 639 938 A1 wird zur Adressvergabe die Lampe aus einer Leuchte herausgenommen, so dass die im folgenden Schritt von einer Zentrale vorgenommene Adressvergabe an dieses manipulierte Gerät erfolgt.

Aus der WO 01/33914 A1 ist es bekannt, dass der Lichtpegel einer angeschlossenen Lampe moduliert wird, um zu zeigen, dass gerade eine Adressvergabe an dieses Betriebsgerät erfolgte.

Natürlich ist es auch möglich, eine herstellerseitig vorgegebene Adresse zu verwenden und diese nach außen hin beispielsweise mittels Aufkleber oder dergleichen kund zu tun, wie es aus der EP 1 480 495 A2 und der EP 1 513 376 A1 bekannt sind. Derartige herstellerseitig vorgegebene Adressen sind aber für weitergehende Busanforderungen zu unflexibel.

Aus dem Dokument WO 02/25842 A2 ist ein Beleuchtungsgerät bekannt, das über einen Sensor Signale empfangen und über einen Emitter Signale senden kann.

Auf jeden Fall nimmt das in Erfahrung bringen der zugewiesenen Adressen beim Aufbau bzw. bei der Änderung eines installierten Bussystems sehr viel Zeit in Anspruch, da ein Bediener sich physikalisch zu jedem angeschlossenen Busteilnehmer begeben muß, um dann an Ort und Stelle üblicherweise visuell die Adressvergabe zu kontrollieren. Dieser Installationsschritt ist natürlich dann besonders mühevoll, wenn die Busteilnehmer in einem Gebäude oder ggf. über mehrere Gebäude hinaus weit verteilt sind. Dies ist gerade bei sogenannten Notlichtgeräten der Fall, die also beim Ausfall einer Netzspannungsversorgung batteriegespeist eine definierte Notbeleuchtung gewährleisten sollen und die üblicherweise besonders weit voneinander beabstandet über Gebäude verteilt sind. Wenn sich also insbesondere bei Notlichtgeräten der Installateur über weite Bereiche des Installationsgebietes bewegen muß, sollte dann zumindest das in Erfahrung bringen der vergebenen Adressen möglichst zügig vonstatten gehen.

Die Erfindung setzt an diesem Punkt an und schlägt eine Technik vor, wie in besonders vorteilhafter Weise Busadressen von Busteilnehmern in Erfahrung gebracht werden können.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Auch wenn im folgenden die Erfindung Bezug nehmend auf Leuchtmittel-Betriebsgeräte mit einer Datenbus-Schnittstelle beschrieben werden wird, so ist zu verstehen, dass die Erfindung gleichermaßen Busteilnehmer eines Beleuchtungs-Bussystems wie beispielsweise Sensoren (Tageslichterfassung, Bewegungsmelder etc.) oder Aktuatoren (elektrische Jalousien etc.) betrifft, denen eine Adresse zugewiesen werden kann.

Gemäß einem ersten Aspekt der vorliegenden Erfindung wird ein Verfahren zur Ermittlung der Busadresse eines Busteilnehmers eines Beleuchtungsbussystems nach Anspruch 1 bereitgestellt.

Für eine Kodierung ist es besonders vorteilhaft, wenn die Leuchtdioden unterschiedliche Farben aufweisen, so dass die wiederzugebende Busadresse mittels der unterschiedlichen Farben kodiert werden kann.

Es können insbesondere mehrere optische und/oder visuelle Signalgeber verwendet werden, um die Busadresse in einem definierten Zahlensystem, wie beispielsweise dem Binär- oder Dezimal-Zahlensystem kodiert wiederzugeben.

Das Wiedergeben der Busadresse über die optischen und/oder akustischen Signalgeber kann insbesondere auf einen eingehenden Befehl von einem angeschlossenen Datenbus hin erfolgen.

Die Vergabe der Busadresse kann in an sich bekannter Weise ausgehend von einer Zentrale über den Datenbus und die Busschnittstelle des Busteilnehmers (Betriebsgeräts) erfolgen.

Ein weiterer Aspekt der vorliegenden Erfindung bezieht sich auf ein Verfahren zur Ermittlung der Busadresse wenigstens eines an einen Datenbus angeschlossenen Teilnehmers in einem Beleuchtungs-Bussystem, insbesondere eines Leuchtmittel-Betriebsgeräts. Dabei wird über den Datenbus zuerst eine Betriebsadresse vergeben bzw. zugeteilt. Danach erfolgt ein Identifizierungsbefehl von einer Zentrale über den Datenbus an den Teilnehmer. Als Antwort auf diesen Identifizierungsbefehl gibt der Teilnehmer mittels optischer und/oder akustischer Signalgeber in kodierter Weise die Busadresse wieder. Im Falle eines Betriebsgeräts für Leuchtmittel sind die akustischen und/oder optischen Signalgeber zusätzlich zu den zu betreibenden Leuchtmitteln am Betriebsgerät vorgesehen.

Die Adressvergabe und/oder die Adresswiedergabe kann von einem Benutzer ausgehend von einem Terminal gemäß dem TCP/IP-Standard durchgeführt werden. Das Terminal gibt also in diesem Fall Signale gemäß dem TCP/IP-Standard aus, die ebenfalls auf einen definierten Busstandard, wie beispielsweise dem DALI-Industriestandard eingesetzt werden können, bevor sie an die angeschlossenen Busteilnehmer übermittelt werden.

Im übrigen können die optischen und/oder akustischen Signalgeber über die Busadresswiedergabe hinaus weitere Funktionen übernehmen. Beispielsweise können sie Zustände des Betriebsgeräts, der angeschlossenen Leuchtmittel und/oder anliegender Versorgungsspannungen wiedergeben.

Die Erfindung bezieht sich auch auf eine elektronische Steuereinheit wie beispielsweise einen Mikroprozessor oder ein ASIC für einen Busteilnehmer, die zur Unterstützung eines derartigen Verfahrens ausgelegt ist.

Die Erfindung bezieht sich auch auf ein Busteilnehmergerät, insbesondere ein Betriebsgerät für Leuchtmittel wie beispielsweise elektronische Vorschaltgeräte für Gasentladungslampen, das zur Unterstützung eines derartigen Verfahrens ausgelegt ist.

Das Betriebsgerät kann insbesondere ein Notlicht-Betriebsgerät für ein Leuchtmittel sein.

Ganz allgemein bezieht sich die Erfindung auch auf die Verwendung von insbesondere mehrfarbigen Leuchtdioden eines Busteilnehmers, die auch die Funktion einer Statusanzeige haben, zur kodierten Wiedergabe einer Busadresse des Busteilnehmers.

Weitere Merkmale, Vorteile, Eigenschaften sollen nunmehr anhand eines Ausführungsbeispiels und Bezug nehmend auf die beigefügten Figuren der Zeichnungen erläutert werden.
- Fig. 1: zeigt dabei ein erfindungsgemäßes Beleuchtungssystem aufweisend ein HF-Vorschaltgerät sowie ein batteriegespeistes Notlichtmodul, und
- Fig. 2: zeigt ein kombiniertes TCP-IP- und DALI-Netzwerk, dass zur Adressvergabe und Ermittlung der Busadressen gemäß der vorliegenden Erfindung verwendet werden kann.

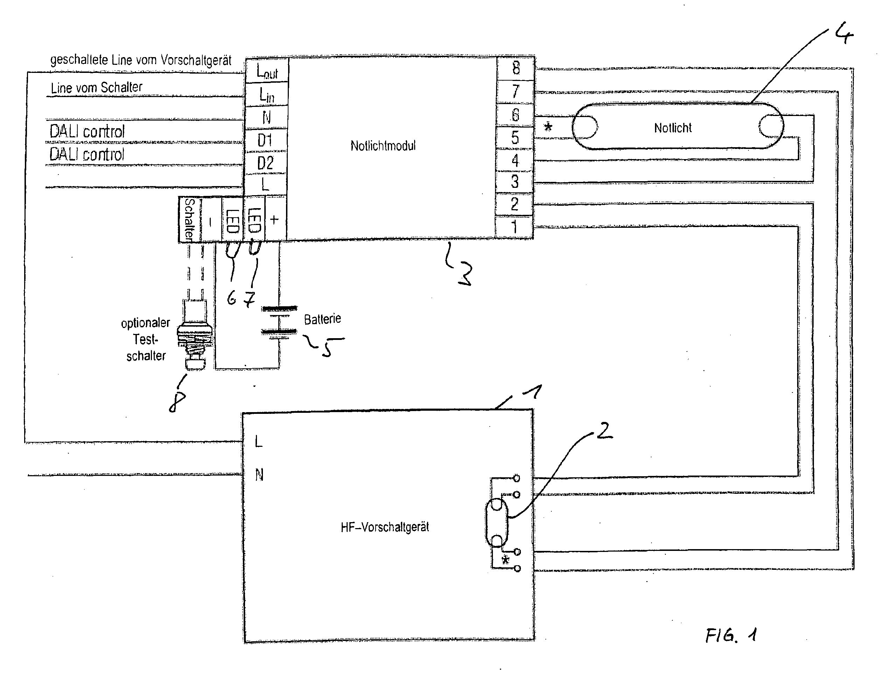

In Fig. 1 ist ein elektronisches Vorschaltgerät 1 gezeigt, das als angeschlossenes Leuchtmittel eine Gasentladungslampe 2 ansteuert und betreibt. Wie gesagt, dieses elektronische Vorschaltgerät 1 stellt nur ein Beispiel für ein Betriebsgerät für Leuchtmittel dar. In bekannter Weise ist das Vorschaltgerät 1 mit einer Netzversorgungsspannung (L, N) verbunden.

Wenn die Netzspannungsversorgung L, N ausfällt, muß ein Notlichtmodul 3 die Steuerung des Betriebs entweder desselben Leuchtmittels 2 oder eines extra dafür vorgesehenen Notlichtmittels 4 übernehmen.

Das Notlichtmodul 3 ist auch mit der Netzspannung L, N versorgt. Indessen dient diese Netzspannungsversorgung zum Laden einer autonomen Spannungsversorgung, im dargestellten Beispiel einer Batterie 5, die beim Ausfall der Netzspannungsversorgung und dem eigentlichen Aktivwerden des Notlichtmoduls 3 die Spannungsversorgung automatisch übernimmt. Weiterhin wird über diese Anschlüsse L,N des Notlichtmoduls auch ein Ausfall der Netzversorgung erfasst, der ein schnelles Umschalten auf den Notlichtbetrieb nötig macht.

Das Notlichtmodul 3 ist busfähig, indem es eine Schnittstelle für einen digitalen Datenbus D1, D2 aufweist, an den beispielsweise ein aus dem Stand der Technik an sich gut bekannter Datenbus gemäß dem DALI-Standard angeschlossen werden kann. Es kann ein Eindrahtbus oder auch ein Mehrdrahtbus vorgesehen sein.

Der DALI-Standard stellt natürlich nur ein Beispiel für das verwendete Protokoll dar.

Das Notlichtmodul 3 weist optische und/oder akustische Signalgeber auf. Bevorzugt werden optische Signalgeber 6, 7 verwendet, die auch zur Wiedergabe anderer Zustände des Notlichtmoduls 3, des angeschlossenen Leuchtmittels 4 und/oder der Spannungsversorgung LN in dem Notlichtmodul 3 vorgesehen sind. Es können aber auch Signalgeber vorgesehen werden, die allein dem Zweck der Adresswiedergabe dienen.

Insbesondere kommen als optische Signalgeber wie dargestellt, verschiedenfarbige optische Signalgeber insbesondere verschiedenfarbige LEDs 6, 7 infrage.

Bei akustischen uns optischen Signalgebern kann im übrigen auch eine Codierung über die Zeitdauer des Signals, also im Sinne einer Morse-Codierung erfolgen.

An dem Notlichtmodul 3 kann weiterhin ein optionaler Testschalter 8 vorgesehen sein, bei dessen Betätigung das Notlichtmodul 3 definierte Funktionen ausführt und insbesondere auf dessen Betätigung hin das Notlichtmodul 3 eine optische und/oder akustische Wiedergabe einer ihm zugeteilten bzw. sich selbst zugewiesenen Betriebsadresse ausführt.

Im vorliegenden soll nunmehr davon ausgegangen sein, dass das Notlichtmodul 3 (das wie gesagt nur ein Beispiel für einen digitalbusfähigen Busteilnehmer darstellt) bereits eine Busadresse aufweist. Dies Busadresse kann grundsätzlich bereits herstellerseitig implementiert worden sein. Die Erfindung bezieht sich aber insbesondere auf Szenarien, bei denen die Busadressvergabe ausgehend von einer Zentrale über den angeschlossenen DALI-Bus erfolgt.

Auf einen manuellen oder einen digitalen Befehl hin wird das Notlichtmodul 3 veranlasst, die in ihm vorliegende Busadresse optisch und/oder akustisch einem in der Nähe befindlichen Benutzer mitzuteilen. Manuell kann wie gesagt dieser Vorgang beispielsweise über den Testschalter 8 auch direkt am Notlichtmodul 3 ausgelöst werden. Besonders vorteilhaft ist es aber auch, wenn eines oder ggf. auch alle angeschlossenen Busteilnehmer von der Buszentrale angewiesen werden, ihre Busadressen akustisch und/oder optisch wiederzugeben. Wenn sämtliche Teilnehmer angewiesen werden, ihre Busadresse wiederzugeben, wird oft von 'Broadcast'-Befehl gesprochen.

Im folgenden soll als Beispiel die Wiedergabe der Adresse in optischer Weise unter Verwendung verschiedenfarbiger LEDs 6, 7 geschildert werden. Die anstehende Wiedergabe der Adresse kann durch ein eigenständiges optisches Signal angekündigt werden.

Danach kann die vorliegende Adresse in ein Zahlensystem kodiert durch die verschiedenfarbigen LEDs 6, 7 wiedergegeben werden. Jede Farbe kann dabei die Stellung einer Stelle des Zahlensystems, beispielsweise des Binärsystems oder des Dezimalzahlensystems wiederspiegeln (die Farbcodierung kann ggf. mit anderen Codierungen wie bspw. der Zeitdauer des "Blinkens" im Sinne eines Morsens kombiniert werden.

Beispielsweise kann das zweifache Blinken einer roten Diode als Wert '2' interpretiert werden, während das einmalige Blinken einer 'grünen' Diode als den Wert '10' für den Fall des Beispiels des Dezimalzahlensystems interpretiert wird. Der Benutzer muß also lediglich von Hand oder auch ggf. unter Benutzung eines entsprechenden Erfassungswerkzeugs (manueller Zähler oder optischer Sensor zur automatischen Decodierung der Busadresse) die Anzahl des Blinkens des entsprechenden optischen Leuchtmittels notieren und dann mit dem Wert der entsprechenden Stelle des Zahlensystems gewichten.

Da üblicherweise Betriebsadressen in digitalen Bussystemen binär kodiert sind, ist natürlich auch eine binär kodierte Wiedergabe der Betriebsadresse dann von großem Vorteil.

Es kann sein, dass die eigentlichen Leuchtmittel (bspw. Leuchtstofflampe(n)) automatisch während der Adressierungsphase von ihrem zugeordneten Betriebsgerät (bspw. elektronisches Vorschaltgerät) abgeschaltet oder wenigstens gedimmt werden, um während der Adressierungsphase nicht mit den Dioden zu interferieren, die zur Zustandswiedergabe, bspw. zu ihrer Adresswiedergabe dienen. Somit kann das optische Diodensignal also besser erfasst werden.

Darüber hinaus werden die eigentlichen Leuchtmittel durch diese Massnahme geschont, was besonders bei Notbeleuchtungen von Vorteil ist, bei denen der Lampenbetrieb nicht lampenschonend geregelt ist.

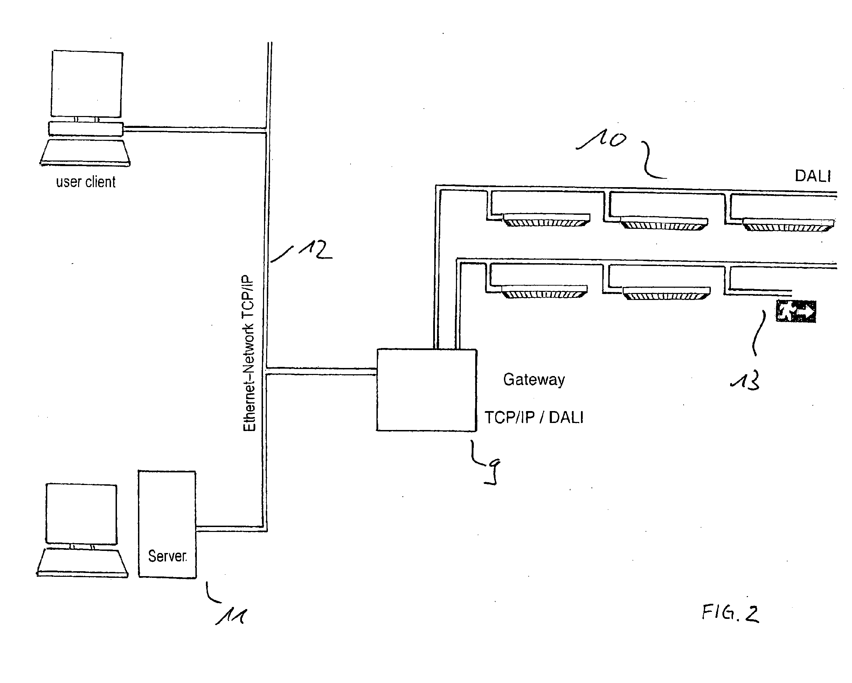

In Fig. 2 ist schematisch dargestellt, dass der Benutzer zur entsprechenden Programmierung des allgemein mit 10 bezeichneten Beleuchtungs-Bussystems (beispielsweise ein DALI-Bussystem) ein Terminal 11 bereitgestellt werden kann, dass mit einem Netzwerk gemäß dem TCP/IP Internet Protocol)-Standard 12 kommuniziert. Ein Umsetzer 9 dient dazu, die über das TCP/IP-Netzwerk 12 eingehenden Befehle beispielsweise auf den DALI-Standard umzusetzen, um dann die unterschiedlichen Busteilnehmer des Beleuchtungs-Bussystems 10 anzusteuern, um sie beispielsweise zur Wiedergabe der ihr zugewiesenen Busadresse zu veranlassen.

Mit 13 ist als ein Teilnehmer des Beleuchtungs-Bussystems 10 eine Notbeleuchtung bezeichnet.

## Patentansprüche

1. Verfahren zur Ermittlung der Busadresse eines Busteilnehmers in einem Beleuchtungs-Bussystem (10), wobei ein Busteilnehmer ein Leuchtmittel-Betriebsgerät (1) mit einer Datenbus-Schnittstelle ist, bei dem das Betriebsgerät (1) über die zu betreibenden Leuchtmittel (4) hinaus weitere optische Signalgeber (6, 7), die zur Statusanzeige vorgesehen sind, aufweist, wobei die Signalgeber (6, 7) Leuchtdioden sind, mit dem Schritt der Widergabe der Busadresse in codierter Form durch die Signalgeber (6, 7).

2. Verfahren nach Anspruch 1,
bei dem Leuchtdioden unterschiedlicher Farbe verwendet werden und die Busadresse mittels der unterschiedlichen Farbe codiert werden.

3. Verfahren nach Anspruch 1 oder 2,
bei dem mehrere optische und/oder visuelle Signalgeber (6, 7) verwendet werden, um die Busadresse in einem definierten Zahlensystem codiert wiederzugeben.

4. Verfahren nach Anspruch 3,
bei dem die Busadresse gemäß dem Binär- oder Dezimal-Zahlensystem codiert ist.

5. Verfahren nach einem der vorhergehenden Ansprüche,
bei dem das Betriebsgerät (1) die Busadresse ausgelöst durch einen über einen angeschlossenen Datenbus (10) eingehenden Befehl wiedergibt.

6. Verfahren nach einem der vorhergehenden Ansprüche,
bei dem eine Vergabe der Busadresse ausgehend von einer Zentrale über einen Datenbus (10) und die Datenbus-Schnittstelle des Betriebsgeräts (1) erfolgt.

7. Verfahren nach Anspruch 1, aufweisend die folgenden Schritte:
- Zuteilung einer Busadresse über den Datenbus an das Betriebsgerät (1),
- Übersendung eines Identifizierungsbefehls über den Datenbus and das Betriebsgerät (1),
- Optische, codierte Wiedergabe der Busadresse durch das Betriebsgerät mittels optischer Signalgeber (6, 7), die zusätzlich zu den zu betreibenden Leuchtmitteln (4) am Betriebsgerät (1) vorgesehen sind.

8. Verfahren nach Anspruch 7,
bei dem die Adressvergabe und/oder die Adresswiedergabe ausgehend von einem Terminal gemäss dem TCP/IP-Standard ausgelöst werden und eine Umsetzung auf einen definierten Busstandard, insbesondere dem DALI-Standard erfolgt.

9. Verfahren nach einem der vorhergehenden Ansprüche,
bei dem die optischen Signalgeber (6, 7) Zustände des Betriebsgeräts (1) und/oder der angeschlossenen Leuchtmittel (4) und/oder anliegender Versorgungsspannungen wiedergeben.

10. Elektronische Steuereinheit für einen Busteilnehmer, wobei der Busteilnehmer ein Leuchtmittel-Betriebsgerät mit einer Datenbus-Schnittstelle ist, ,
die zur Durchführung eines Verfahrens nach einem der vorhergehenden Ansprüche dazu ausgelegt ist, über zu betreibende Leuchtmittel (4) hinaus weitere optische Signalgeber (6, 7), die zur Statusanzeige vorgesehen sind, anzusteuern, wobei die Signalgeber (6, 7) Leuchtdioden sind, und wobei die elektronische Steuereinheit dazu eingerichtet ist, die Signalgeber (6, 7) zur Widergabe der Busadresse in codierter Form anzusteuern.

11. Steuereinheit nach Anspruch 10,
die ein Microprocessor oder ein ASIC ist.

12. Betriebsgerät für Leuchtmittel mit einer Datenbus-Schnittstelle,
das zur Durchführung eines Verfahrens nach einem der Ansprüche 1 bis 9 ausgelegt ist, wobei das Betriebsgerät dazu eingerichtet ist, über zu betreibende Leuchtmittel (4) hinaus weitere optische Signalgeber (6, 7), die zur Statusanzeige vorgesehen sind, anzusteuern, wobei die Signalgeber (6, 7) Leuchtdioden sind, und wobei die elektronische Steuereinheit dazu eingerichtet ist, die Signalgeber (6, 7) zur Widergabe der Busadresse in codierter Form anzusteuern.

13. Betriebsgerät nach Anspruch 12,
**dadurch gekennzeichnet,**
**dass** es ein Notlicht-Betriebsgerät ist.

14. Betriebsgerät nach einem der Ansprüche 12 oder 13,
**dadurch gekennzeichnet,**
**dass** es ein elektronisches Vorschaltgerät ist.

15. Bussystem, aufweisend ein Betriebsgerät nach einem der Ansprüche 12 bis 14.

16. Verwendung von Leuchtdioden eines Busteilnehmers,
wobei der Busteilnehmer ein Leuchtmittel-Betriebsgerät mit einer Datenbus-Schnittstelle ist, die zur Statusanzeige vorgesehen sind, zur codierten Wiedergabe einer Busadresse des Busteilnehmers.

## Claims

1. Method for ascertaining the bus address of a bus subscriber in a lighting bus system (10), wherein a bus subscriber is an illuminant operating unit (1) having a data bus interface, in which the operating unit (1) has, beyond the illuminants (4) that are to be operated, further optical signal generators (6, 7) that are provided for status indication, wherein the signal generators (6, 7) are light emitting diodes, with the step of reproduction of the bus address in coded form by the signal generators (6, 7).

2. Method according to Claim 1,
in which light emitting diodes of different colour are used and the bus address is coded by means of the different colour.

3. Method according to Claim 1 or 2,
in which a plurality of optical and/or visual signal generators (6, 7) are used in order to reproduce the bus address in coded form using a defined numerical system.

4. Method according to Claim 3,
in which the bus address is coded on the basis of the binary or decimal numerical system.

5. Method according to one of the preceding claims,
in which the operating unit (1) reproduces the bus address under the initiation of a command that is received via a connected data bus (10).

6. Method according to one of the preceding claims,
in which the bus address is allocated from a control centre via a data bus (10) and the data bus interface of the operating unit (1).

7. Method according to Claim 1, having the following steps:
- a bus address is allocated to the operating unit (1) via the data bus,
- an identification command is sent to the operating unit (1) via the data bus (1),
- the bus address is reproduced in optical, coded form by the operating unit by means of optical signal generators (6, 7) that are provided on the operating unit (1) in addition to the illuminants (4) that are to be operated.

8. Method according to Claim 7,
in which the address allocation and/or the address reproduction are initiated from a terminal in accordance with the TCP/IP standard and conversion to a defined bus standard, particularly the DALI standard, takes place.

9. Method according to one of the preceding claims,
in which the optical signal generators (6, 7) reproduce states of the operating unit (1) and/or of the connected illuminants (4) and/or of applied supply voltages.

10. Electronic control unit for a bus subscriber,
wherein the bus subscriber is an illuminant operating unit having a data bus interface that, in order to carry out a method according to one of the preceding claims, is designed to actuate, beyond illuminants (4) that are to be operated, further optical signal generators (6, 7) that are provided for status indication, wherein the signal generators (6, 7) are light emitting diodes and wherein the electronic control unit is set up to actuate the signal generators (6, 7) to reproduce the bus address in coded form.

11. Control unit according to Claim 10, which is a microprocessor or an ASIC.

12. Operating unit for illuminants having a data bus interface,
which operating unit is designed to carry out a method according to one of Claims 1 to 9, wherein the operating unit is set up to actuate, beyond illuminants (4) that are to be operated, further optical signal generators (6, 7) that are provided for status indication, wherein the signal generators (6, 7) are light emitting diodes and wherein the electronic control unit is set up to actuate the signal generators (6, 7) to reproduce the bus address in coded form.

13. Operating unit according to Claim 12, **characterized**
**in that** it is an emergency light operating unit.

14. Operating unit according to either of Claims 12 and 13,
**characterized**
**in that** it is an electronic ballast.

15. Bus system having an operating unit according to one of Claims 12 to 14.

16. Use of light emitting diodes of a bus subscriber, wherein the bus subscriber is an illuminant operating unit having a data bus interface and having further optical signal generators that are provided for status indication, for the coded reproduction of a bus address of the bus subscriber.

## Revendications

1. Procédé pour déterminer l'adresse de bus d'un participant à un bus dans un système de bus pour éclairage (10),
dans lequel un participant à un bus est un dispositif de commande pour moyens d'éclairage (1) avec une interface de bus de données, dans lequel le dispositif de commande (1) présente, en plus des moyens d'éclairage (4) destinés à être commandés, d'autres générateurs de signaux optiques (6, 7) qui sont prévus pour une indication de statut, dans lequel les générateurs de signaux (6, 7) sont des diodes électroluminescentes, avec l'étape de la reproduction de l'adresse de bus sous forme codée au moyen des générateurs de signaux (6, 7).

2. Procédé selon la revendication 1,
dans lequel des diodes électroluminescentes de couleurs différentes sont utilisées et l'adresse de bus est codée au moyen des différentes couleurs.

3. Procédé selon la revendication 1 ou 2,
dans lequel plusieurs générateurs de signaux optiques et/ou visuels sont utilisés pour reproduire l'adresse de bus de manière codée selon un système numérique défini.

4. Procédé selon la revendication 3,
dans lequel l'adresse de bus est codée selon le système numérique binaire ou décimal.

5. Procédé selon l'une des revendications précédentes,
dans lequel le dispositif de commande (1) reproduit l'adresse de bus en conséquence d'une instruction reçue par l'intermédiaire d'un bus de données raccordé (10).

6. Procédé selon l'une des revendications précédentes,
dans lequel une allocation de l'adresse de bus est réalisée à partir d'une station centrale par l'intermédiaire d'un bus de données (10) et de l'interface de bus de données du dispositif de commande (1).

7. Procédé selon la revendication 1, présentant les étapes suivantes :
- attribution d'une adresse de bus au dispositif de commande (1) par l'intermédiaire du bus de données,
- envoi d'une instruction d'identification au dispositif de commande (1) par l'intermédiaire du bus de données,
- reproduction optique codée de l'adresse de bus par le dispositif de commande au moyen de générateurs de signaux optiques (6, 7), qui sont prévus au dispositif de commande (1) en plus des moyens d'éclairage (4) destinées à être commandés.

8. Procédé selon la revendication 7,
dans lequel l'allocation d'adresse et/ou la reproduction d'adresse sont déclenchées à partir d'un terminal selon la norme TCP/IP et une conversion est réalisée vers une norme de bus définie, en particulier la norme DALI.

9. Procédé selon l'une des revendications précédentes,
dans lequel les générateurs de signaux optiques (6, 7) reproduisent des états du dispositif de commande (1) et/ou des moyens d'éclairage raccordés (4) et/ou d'une tension d'alimentation appliquée.

10. Unité de commande électronique pour un participant à un bus, dans lequel le participant à un bus est un dispositif de commande pour moyens d'éclairage avec une interface de bus de données,
laquelle est, afin d'exécuter un procédé selon l'une des revendications précédentes, configurée pour commander, en plus de moyens d'éclairage (4) destinés à être commandés, d'autres générateurs de signaux optiques (6, 7) qui sont prévus pour une indication de statut, dans laquelle les générateurs de signaux (6, 7) sont des diodes électroluminescentes, et dans laquelle l'unité de commande électronique est configurée pour commander les générateurs de signaux (6, 7) afin de reproduire l'adresse de bus sous forme codée.

11. Unité de commande selon la revendication 10,
qui est un microprocesseur ou un ASIC.

12. Dispositif de commande pour moyens d'éclairage avec une interface de bus de données,
qui est conçu pour exécuter un procédé selon l'une des revendications 1 à 9, dans lequel le dispositif de commande est configuré pour commander, en plus de moyens d'éclairage (4) destinés à être commandés, d'autres générateurs de signaux optiques (6, 7) qui sont prévus pour une indication de statut, dans lequel les générateurs de signaux (6, 7) sont des diodes électroluminescentes, et dans lequel l'unité de commande électronique est configurée pour commander les générateurs de signaux (6, 7) afin de reproduire l'adresse de bus sous forme codée.

13. Dispositif de commande selon la revendication 12,
**caractérisé en ce qu'**il s'agit d'un dispositif d'éclairage de secours.

14. Dispositif de commande selon l'une des revendications 12 ou 13,
**caractérisé en ce qu'**il s'agit d'un ballast électronique.

15. Système de bus, présentant un dispositif de commande selon l'une des revendications 12 à 14.

16. Utilisation de diodes électroluminescentes d'un participant à un bus, dans laquelle le participant à un bus est un dispositif de commande pour moyens d'éclairage avec une interface de bus de données, qui sont prévues pour une indication de statut, pour une reproduction codée d'une adresse de bus du participant à un bus.
